# EUROPEAN PATENT APPLICATION

(11) **EP 1 652 567 A2**
(43) Date of publication of application: **03.05.2006**
(21) Application number: 05021741.3
(22) Date of filing: 05.10.2005
(51) Int. Cl.: B01D 39/20

(54) **Method for producing silicon nitride filter**

(30) Priority: 05.10.2004 JP 2004292616
(71) Applicant: Asahi Glass Company, Limited, Tokyo 100-8405 (JP)
(72) Inventor: Shinohara, Nobuhiro, Kanagawa-ku Yokohama-shi Kanagawa (JP); Watanabe, Toshinari, Kanagawa-ku Yokohama-shi Kanagawa (JP); Miyakawa, Naomichi, Kanagawa-ku Yokohama-shi Kanagawa (JP); Yanagisawa, Eiji, Kanagawa-ku Yokohama-shi Kanagawa (JP)
(74) Representative: Müller-Boré & Partner Patentanwälte

(57) **Abstract**

A method for producing a silicon nitride filter, which comprises subjecting a molded product comprising from 35 to 58 mass% of metal silicon particles, from 30 to 62.5 mass% of organic polymer particles, from 0.3 to 10 mass% based on the content of the organic polymer particles of the following inorganic particles A and from 1 to 15 mass% based on the content of the metal silicon particles of the following inorganic particles B, to a heat treatment in nitrogen to substantially convert metal silicon into silicon nitride:
inorganic particles A: inorganic particles of at least one member selected from the group consisting of an oxide, a hydroxide and a salt of an element selected from the group consisting of Si, Ti and Ce;
inorganic particles B: inorganic particles of at least one member selected from the group consisting of an oxide, a hydroxide and a salt of an element selected from the group consisting of Mg, Y, La, Nd, Yb, Ca and Fe.

## Description

The present invention relates to a method for producing a silicon nitride filter suitable for removing powder dust, etc. contained in a high temperature exhaust gas, having a porous structure with a high porosity and a large average pore diameter and with a small amount of pores having small pore diameters.

Silicon nitride has characteristics excellent in heat resistance, corrosion resistance, chemical resistance, mechanical strength, etc. and is expected to be useful for a filter (hereinafter referred to as DPF) for removal of fine particles (hereinafter referred to as particulates) discharged from a diesel engine or for a filter for collection or removal of dust under high temperature or corrosive environment. Methods for producing such silicon nitride filters may generally be classified on the basis of starting materials into a production method wherein silicon nitride particles are used as the starting material and a production method wherein metal silicon particles are used as the starting material (JP-A-52-121613, JP-A-2002-284585, JP-A-2002-284586). A production method wherein metal silicon particles are used as the starting material and silicon nitride is produced by direct nitriding, has a characteristic such that the material cost is usually low as compared with a production method wherein silicon nitride particles are used as the starting material, and thus it is superior from the viewpoint of the production cost.

As a conventional production method wherein metal silicon is used as the starting material, a method of nitriding a molded product comprising a fine metal silicon powder to obtain porous silicon nitride has been proposed (JP-A-52-121613). However, in order to obtain porous silicon nitride with a high porosity, it is required to nitride a metal silicon molded product with a low density, and in such a case, fine silicon nitride fibers tend to form on the surface or in the inside, whereby the resulting porous silicon nitride may have a small average pore diameter.

As a means to solve such a problem, a method has been proposed wherein a molded product comprising metal silicon as the main component is prepared, an oxide on the surface of the metal silicon is removed by controlling the atmosphere before the obtained molded product is nitrided, and then a nitrogen gas is introduced to nitride the metal silicon thereby to obtain porous silicon nitride (JP-A-2002-284585). However, by this method, it tends to be difficult to obtain porous silicon nitride with a sufficiently high porosity and a sufficiently large average pore diameter, and in addition, there are problems also in view of productivity such that a continuous burning furnace excellent in mass productivity cannot be used, since the atmosphere is controlled before nitriding treatment of the metal silicon.

Further, a method has also been proposed wherein while a molded product containing a compound containing metal silicon as the main component and containing at least one element selected from the group consisting of Groups 2, 3 including lanthanoids, 4 and 13 is nitrided, it is subjected to a heat treatment at a temperature higher than the nitriding temperature to obtain porous silicon nitride (JP-A-2002-284586).

This method is to add a powder to be an aid capable of forming a liquid phase at a high temperature into the metal silicon powder, expose the metal silicon powder to high temperature to form a liquid phase, and make Si₃N₄ fibers be dissolved and deposited in the liquid phase to obtain porous silicon nitride having an average pore diameter of at least 3 µm. Further, production of porous silicon nitride having a large pore diameter exceeding 10 µm and having a high porosity exceeding 50% is considered possible by addition of a pore-forming agent such as starch or cellulose. However, organic polymer particles of e.g. starch or cellulose tend to remain as carbon in the process of heat treatment, and react with metal silicon to form silicon carbide, which may impair low thermal expansion or excellent thermal shock resistance as characteristics of silicon nitride. Further, if sufficient thermal decomposition is carried out in the air to suppress remaining of carbon, the strength of the molded product after degreasing tends to be weak, whereby it may be very difficult to handle a honeycomb molded product or the like.

Under these circumstances, it is an object of the present invention to provide a method for producing a silicon nitride filter having a high porosity and a large average pore diameter, having a pore distribution with a small amount of pores having small pore diameters, providing a low pressure loss and being suitable as a DPF.

The present invention provides a method for producing a silicon nitride filter, which comprises subjecting a molded product comprising from 35 to 58 mass% of metal silicon particles, from 30 to 62.5 mass% of organic polymer particles, from 0.3 to 10 mass% based on the content of the organic polymer particles of the following inorganic particles A and from 1 to 15 mass% based on the content of the metal silicon particles of the following inorganic particles B, to a heat treatment in nitrogen to substantially convert metal silicon into silicon nitride:
inorganic particles A: inorganic particles of at least one member selected from the group consisting of an oxide, a hydroxide and a salt of an element selected from the group consisting of Si, Ti and Ce;
inorganic particles B: inorganic particles of at least one member selected from the group consisting of an oxide, a hydroxide and a salt of an element selected from the group consisting of Mg, Y, La, Nd, Yb, Ca and Fe.

According to the production method of the present invention, a silicon nitride filter suitable for collection or removal of dust can easily be produced. The silicon nitride filter obtained by the present invention is excellent in geometrical accuracy, has high strength, is suitable for collection of particulates, etc., and has an average pore diameter and a porosity with which the pressure loss can be reduced, and therefore, it is suitable as a filter particularly as a DPF which is required to have strength, heat resistance, corrosion resistance, durability, etc.

Now, the present invention will be described in detail with reference to the preferred embodiments.

The method for producing a silicon nitride filter of the present invention (hereinafter referred to as the present production method) is characterized by the following structure of the molded product. That is, it is characterized in that the molded product contains metal silicon particles which will be nitrided and converted into silicon nitride particles, organic polymer particles as a pore-forming agent, inorganic particles A having a function to prevent the organic polymer particles from remaining as carbon in the heat treatment process, and inorganic particles B having a function to accelerate sintering of the silicon nitride particles formed by nitriding.

Namely, the present production method is a method for producing a silicon nitride filter, which comprises subjecting a molded product comprising from 35 to 58 mass% of metal silicon particles, from 30 to 62.5 mass% of organic polymer particles, from 0.3 to 10 mass% based on the content of the organic polymer particles of the following inorganic particles A and from 1 to 15 mass% based on the content of the metal silicon particles of the following inorganic particles B, to a heat treatment in nitrogen to substantially convert metal silicon into silicon nitride:
inorganic particles A: inorganic particles of at least one member selected from the group consisting of an oxide, a hydroxide and a salt of an element selected from the group consisting of Si, Ti and Ce;
inorganic particles B: inorganic particles of at least one member selected from the group consisting of an oxide, a hydroxide and a salt of an element selected from the group consisting of Mg, Y, La, Nd, Yb, Ca and Fe.

In the present specification, the content in the molded product is calculated as a solid unless otherwise specified. Namely, the content in the molded product is represented with a liquid content such as a water content in the molded product being removed.

In the present production method, the molded product contains from 35 to 58 mass% of metal silicon particles. If the content of the metal silicon particles in the molded product is less than 35 mass%, sufficient strength of a filter may not be secured, and on the other hand, if the content of the metal silicon particles in the molded product exceeds 58 mass%, no sufficient pores of a filter may be secured, which increases the pressure loss and impairs characteristics of a filter. The molded product contains preferably from 40 to 55 mass%, more preferably from 45 to 50 mass% of metal silicon particles. The purity of the metal silicon particles is not particularly limited, and it is preferably at least 95 mass%, whereby high temperature characteristics of the porous body after sintering will not be impaired.

In the present invention, the average particle diameter of the metal silicon particles is preferably from 1 to 30 µm. If the average particle diameter of the metal silicon particles is less than 1 µm, the filter function may decrease or the pressure loss may increase, since closed pores which make no contribution to the filter function will be formed in a large amount, or the pore diameters tend to be too small. On the other hand, if the average particle diameter of the metal silicon particles exceeds 30 µm, metal silicon particles which are not nitrided tend to remain in the interior of the sintered body, which leads to deformation or decrease in strength of partition walls of the filter. The average particle diameter of the metal silicon particles is preferably from 5 to 20 µm in view of stability of the molded product and mechanical strength of the filter. In the present specification, the particle diameter is meant for the value obtained by a laser diffraction particle diameter distribution measuring apparatus on the basis of the volume.

In the present production method, the molded product contains from 30 to 62.5 mass% of organic polymer particles. The organic polymer particles are not particularly limited so long as they dissipate upon e.g. decomposition at the time of the heat treatment thereby to form pores. Preferred are particles from which a small amount of carbon remains at the time of thermal decomposition. From such a viewpoint, as the composition of the organic polymer particles, the amount of atoms other than carbon, hydrogen, nitrogen and oxygen is as small as possible.

Specifically, polyvinyl alcohol, an acrylic resin, a vinyl acetate resin, cellulose, a cellulose ether, a cellulose ester, a polycarbonate, a melamine resin, a phenol resin, polyethylene terephthalate (PET) and the like may be mentioned as preferred examples. Acrylic resin particles are particularly preferably employed as a pore-forming agent, whereby thermal decomposition is likely to proceed, and the remaining carbon content tends to be low.

Further, in the present production method, when the organic polymer particles remain as particles in the molded product, the average particle diameter is preferably from 10 to 100 µm. If the average particle diameter of the organic polymer particles remaining as particles in the molded product is less than 10 µm, contribution to formation of pores tends to decrease, pores to be formed also tend to have diameters smaller than the aimed diameter, and the pressure loss as a characteristic of a filter may increase. On the other hand, if the average particle diameter of the organic polymer particles remaining as particles in the molded product exceeds 100 µm, the strength of a filter to be obtained may be insufficient. The average particle diameter of the organic polymer particles remaining as particles in the molded product is particularly preferably from 20 to 80 µm for a DPF.

In the present production method, the content of the organic polymer particles is from 30 to 62.5 mass%. If the content is less than 30 mass%, the proportion of pores which fulfill filter function tends to be insufficient, and on the other hand, if the content exceeds 62.5 mass%, although the porosity of the filter tends to be high, no sufficient strength may be obtained and in addition, the particles may not sufficiently be thermally decomposed in a temperature-increasing step of the heat treatment and are likely to remain as carbon. If the organic polymer remains as carbon, it may be a source of formation of silicon carbide in the nitriding process and deteriorate characteristics of the filter. The molded product contains preferably from 33 to 50 mass%, more preferably from 36 to 45 mass% of the organic polymer particles.

In the present production method, the molded product contains inorganic particles A having a function to accelerate thermal decomposition of the organic polymer particles and prevent remaining of carbon in the heat treatment process. The inorganic particles A may have another function in addition to the function to prevent remaining of carbon.

The inorganic particles A are inorganic particles of at least one member selected from the group consisting of an oxide, a hydroxide and a salt of an element selected from the group consisting of Si, Ti and Ce. The oxide is SiO₂, TiO₂ or CeO₂. The hydroxide may, for example, be Si(OH)₄, and the salt may, for example, be Ce(NO₃)₃ or Ce₂(CO₃)₃, but they are not limited thereto. In a case of a hydroxide or a salt other than an oxide, the amount is represented as calculated as an oxide, and the same applies for the following inorganic particles B.

The average particle diameter of the inorganic particles A is preferably from 0.01 to 10 µm. If the average particle diameter of the inorganic particles A is less than 0.01 µm, handling tends to be difficult, and uniform distribution in the molded product tends to be difficult, and if the average particle diameter of the inorganic particles A exceeds 10 µm, the carbon content may not effectively be removed.

In the present production method, the molded product contains inorganic particles B having a function to accelerate sintering of the silicon nitride particles formed by nitriding in the heat treatment process. The inorganic particles B may have another function in addition to the function to accelerate sintering of the silicon nitride particles.

The inorganic particles B are inorganic particles of at least one member selected from the group consisting of an oxide, a hydroxide and a salt of an element selected from the group consisting of Mg, Y, La, Nd, Yb, Ca and Fe. The oxide is MgO, Y₂O₃, La₂O₃, Nd₂O₃ , Yb₂O₃, CaO, Fe₂O₃, FeO or Fe₃O₄. The hydroxide may, for example, be Mg(OH)₂, and the salt is a carbonate or a nitrate and specifically, it may, for example, be Mg(NO₃)₂ or MgCO₃, but they are not limited thereto.

The inorganic particles B are preferably two or more types of inorganic particles, such as MgO and Y₂O₃, Y₂O₃ and Nd₂O₃, MgO and Yb₂O₃, or MgO and Fe₂O₃, whereby sintering will be effectively accelerated from a lower temperature. The average particle diameter of the inorganic particles B is preferably from 0:01 to 10 µm. If the average particle diameter of inorganic particles B is less than 0.01 µm, handling tends to be difficult, and uniform distribution in the molded product tends to be difficult, and if the average particle diameter of the inorganic particles B exceeds 10 µm, the effect of accelerating sintering may be impaired.

The molded product contains the inorganic particles A and the inorganic particles B in a total amount of preferably from 0.5 to 12 mass%. If the molded product contains the inorganic particles A and the inorganic particles B in a total amount of less than 0.5 mass%, no sufficient effect as the sintering aid or effect to prevent remaining of carbon may be obtained, and on the other hand, if the molded product contains the inorganic particles A and the inorganic particles B in a total amount exceeding 12 mass%, the amount of the metal silicon particles or the pore-forming agent in the molded product tends to be too small, whereby no desired filter may be obtained. The molded product contains the inorganic particles A and the inorganic particles B in a total amount of more preferably from 2 to 11 mass%, particularly preferably from 3 to 10 mass%.

Further, in order to obtain a sufficient effect of preventing remaining of carbon, the ratio of the content of the inorganic particles A to the content of the organic polymer particles in the molded product, i.e. (the content of the inorganic particles A)/(the content of the organic polymer particles) (hereinafter this ratio will be referred to as the inorganic particle A content ratio) is from 0.3 to 10 mass%. If the inorganic particle A content ratio is less than 0.3 mass%, the remaining carbon content tends to be high, and silicon carbide tends to be formed in a large amount in a silicon nitride filter to be finally obtained, which leads to a decrease in the thermal shock resistance or strength. Further, if the inorganic particle A content ratio exceeds 10 mass%, products other than silicon nitride tend to be formed in a large amount, and the coefficient of thermal expansion of a silicon nitride filter to be obtained tends to be high. The inorganic particle A content ratio is more preferably from 0.8 to 9 mass%, particularly preferably from 1 to 8.5 mass%.

Similarly, in order to obtain a sufficient effect of the sintering aid, the ratio of the content of the inorganic particles B to the content of the metal silicon particles in the molded product, i.e. (the content of the inorganic particles B)/(the content of the metal silicon particles) (hereinafter this ratio will be referred to as inorganic particle B content ratio) is from 1 to 15 mass%. If the inorganic particle B content ratio is less than 1 mass%, the strength of a filter to be obtained will not sufficiently be secured. Further, since the amount of a liquid phase to be formed tends to be small, reorganization of pores formed among the silicon nitride particles will not be accelerated and resultingly, the pore diameter of a filter to be obtained tends to be small, and the pressure loss tends to increase. Further, in a filter to be obtained, β type silicon nitride crystals excellent in high temperature characteristics will not be completely deposited, but α type crystals inferior in high temperature characteristics may coexist, and resultingly, the heat resistance tends to be impaired.

On the other hand, if the inorganic particle B content ratio exceeds 15 mass%, although mechanical strength at room temperature tends to be high since sintering will sufficiently proceed, the amount of the liquid phase resulting from the sintering aid tends to be too large, whereby mechanical strength at high temperature tends to decrease, and the coefficient of thermal expansion tends to be high. The inorganic particle B content ratio is more preferably from 2 to 12 mass%, particularly preferably from 3 to 10 mass%.

In the molded product, the total amount of the metal silicon particles, the polymer particles, the inorganic particles A and the inorganic particles B is at least 90 mass%. If the total amount is less than 90 mass%, no filter having sufficient characteristics may be obtained.

In the present production method, a common mixing means such as a mixer or a ball mill may be used for mixing the metal silicon particles, the organic polymer particles, the inorganic particles A and the inorganic particles B. As a method for preparing a honeycomb molded product, a forming aid such as water, an organic solvent or an organic binder may suitably be added to the above mixed materials, followed by kneading to obtain a molding material, which is molded by e.g. extrusion.

As such an organic binder, an organic substance such as polyvinyl alcohol or its modified product, starch or its modified product, carboxymethylcellulose, hydroxymethylcellulose, polyvinyl pyrrolidone, an acrylic resin or an acrylic copolymer, a vinyl acetate resin or a vinyl acetate copolymer, polyethylene glycol, propylene glycol or glycerol, may be used. In the present specification, the solid content of the organic binder is included in the amount of the organic polymer particles as the pore-forming agent.

The forming aid such as the above organic binder is removed by degreasing. The degreasing is carried out preferably at a temperature lower than the melt temperature of metal silicon, preferably from 300 to 900°C. The degreasing may be carried out in an oxidizing atmosphere such as in the air or in an inert gas atmosphere such as in a nitrogen gas or an Ar gas, and in a case where it is carried out in the air, attention has to be paid so that the surface of the metal silicon particles or the silicon nitride particles will not be excessively oxidized. The degreasing may be carried out at a separate step from a first stage heat treatment as described hereinafter, or may be carried out in a heat-increasing step in the first stage heat treatment.

Regarding the heat treatment of the molded product, a first stage heat treatment is carried out preferably by holding the molded product in a nitrogen atmosphere at a temperature of from 1,000 to 1,400°C for from 4 to 24 hours. If the temperature is less than 1,000°C, metal silicon will not sufficiently be nitrided, and if the temperature exceeds 1,400°C, the metal silicon particles will be melted at a temperature close to the melting point (1,410°C) of metal silicon, and the shape of the sintered body may not be maintained. Further, if the holding time is less than 4 hours, nitriding of the metal silicon particles tends to be insufficient, and if the holding time exceeds 24 hours, the nitriding tends to proceed slowly, thus increasing the operation cost. In a case where the degreasing is carried out in the first stage heat treatment, the temperature may be decreased once after completion of the degreaseing, or the heat treatment may be carried out without decreasing the temperature.

A second stage heat treatment is carried out preferably by holding the molded product in a nitrogen atmosphere at a temperature of from 1,450 to 1,800°C for from 1 to 12 hours. If the temperature is less than 1,450°C, the silicon nitride particles formed by nitriding the metal silicon particles will not sufficiently be bound, and the strength of the filter tends to be insufficient, and if it exceeds 1, 800°C, the silicon nitride particles tend to decompose.

Further, if the holding time is less than 1 hour, binding of the silicon nitride particles will not sufficiently proceed, and if it exceeds 12 hours, silicon nitride is likely to decompose particularly at high temperature. The first stage heat treatment and the second stage heat treatment may be carried out while the temperature is once decreased between them or may be carried out continuously without decreasing the temperature.

The temperature-increasing rate at the time of the heat treatment is suitably selected depending upon the size, the shape etc. of the molded product, and it is preferably from 20 to 200°C/h since a large amount of decomposed gas is generated in the degreasing step. The nitrogen atmosphere means an atmosphere containing substantially nitrogen alone and containing no oxygen, but the atmosphere may contain another inert gas or hydrogen. The nitrogen partial pressure is preferably at least 50 kPa.

The porosity of a silicon nitride filter to be obtained by the present production method is preferably from 50 to 80%. If the porosity is less than 50%, the pressure loss tends to be high, and if the porosity exceeds 80%, the strength tends to be weak. The porosity is preferably from 55 to 75%.

The average pore diameter of a silicon nitride filter to be obtained by the present production method as measured by mercury porosimetry is preferably from 10 to 30 µm. If the average pore diameter is less than 10 µm, the pressure loss when the filter is used tends to be significant. If the average pore diameter exceeds 30 µm, fine particles in an exhaust gas such as diesel particulates are hardly scavenged and removed. The average particle diameter is more preferably from 8 to 28 µm, particularly preferably from 10 to 27 µm.

Now, the present invention will be described in further detail with reference to Examples of the present invention (Examples 1 to 8) and Comparative Examples (Examples 9 to 12).

### MATERIALS

As metal silicon particles, particles having an average particle diameter of 20 µm and a purity of 98.5 mass% (SILGRAIN, trade name, manufactured by Elkem Corporation) were used. As a pore-forming agent, acrylic polymer particles having an average particle diameter of 150 µm (SS-1000P, trade name, manufactured by KURARAY CO., LTD.) and PET resin particles having an average particle diameter of 5 mm (KS710B, trade name, manufactured by KURARAY, CO., LTD.) were subjected to a grinder to obtain polymer particles having an average particle diameter of 75 µm. As phenol resin particles, particles having an average particle diameter of 70 µm (BJO-8040, manufactured by APM) were used.

As inorganic particles A, silica particles having an average particle diameter of 0.15 µm and a purity of 93 mass% (manufactured by Tomoe Engineering Co., Ltd.), titanium oxide particles having an average particle diameter of 0.02 µm and a purity of 95 mass% (MC-90, trade name, manufactured by ISHIHARA SANGYO KAISHA, LTD.) or cerium oxide particles having an average particle diameter of 1 µm and a purity of 99.9 mass% (manufactured by Shin-Etsu Chemical Co., Ltd.) were used.

As inorganic particles B, yttrium oxide particles having an average particle diameter of 1.3 µm and a purity of 99.9 mass% (RU-P, trade name, manufactured by Shin-Etsu Chemical Co., Ltd.), lanthanum oxide particles having an average particle diameter of 1 µm and a purity of 99.99 mass% (manufactured by Shin-Etsu Chemical Co., Ltd.), neodymium oxide particles having an average particle diameter of 4 µm and a purity of 99.5 mass% (manufactured by NN Chemical), ytterbium oxide particles having an average particle diameter of 1 µm and a purity of 99.9 mass% (manufactured by NIPPON YTTRIUM CO., LTD.) or ferric oxide (Fe₂O₃) particles having an average particle diameter of 1 µm and a purity of 99.9 mass% (manufactured by JAPAN PURE CHEMICAL CO., LTD.) were used.

Magnesium carbonate having a purity of 98 mass% (#200, trade name, manufactured by Konoshima Chemical Co., Ltd.) was used as a substitute for magnesium oxide, and calcium carbonate (calcium carbonate light, trade name, manufactured by Konoshima Chemical Co., Ltd.) was used as a substitute for calcium oxide.

These materials were mixed to obtain a powder having a composition as shown in Table 1, and 15 parts by mass of methylcellulose, 43 parts by mass of water and 2.8 parts by mass of glycerol as a lubricant were added to 100 parts by mass of the mixed powder, followed by mixing by a kneader to obtain a material for extrusion. The obtained material was molded into a honeycomb structure (200 cells in 2.54 cmx2.54 cm) by a screw type continuous extruder. The obtained honeycomb was heated to 500°C at 2°C/min and held for 1 hour, and after removal of the molding aid, it was heated to 1,350°C at 2°C/min and held for 3 hours, and then heated to 1,700°C at 5°C/min and held for 3 hours to obtain a sintered body. The evaluation results are shown in Table 1.

### CHARACTERISTIC EVALUATION METHODS

The pore characteristic was measured by a mercury porosimeter (AutoSCAN-33, trade name, manufactured by Yuasa Ionics Inc.), and the coefficient of thermal expansion was measured by a differential thermal expansion measuring apparatus (TAS-100, trade name, manufactured by Rigaku Corporation) within a range of from room temperature to 1,000°C. The crystal phase was identified by X-ray diffraction.

The compressive strength was measured in such a manner that a test specimen of 10×10×10 mm was cut out from the honeycomb and set in a strength measuring apparatus (AUTOGRAPH AGS-10KNJ, trade name, manufactured by Simadzu Corporation) so that the compression direction and through-holes would be in parallel with each other. In the following Table, βSN and SiC in the "Crystal phase" mean that a β-phase Si₃N₄ crystal phase and a SiC crystal phase were identified, respectively.

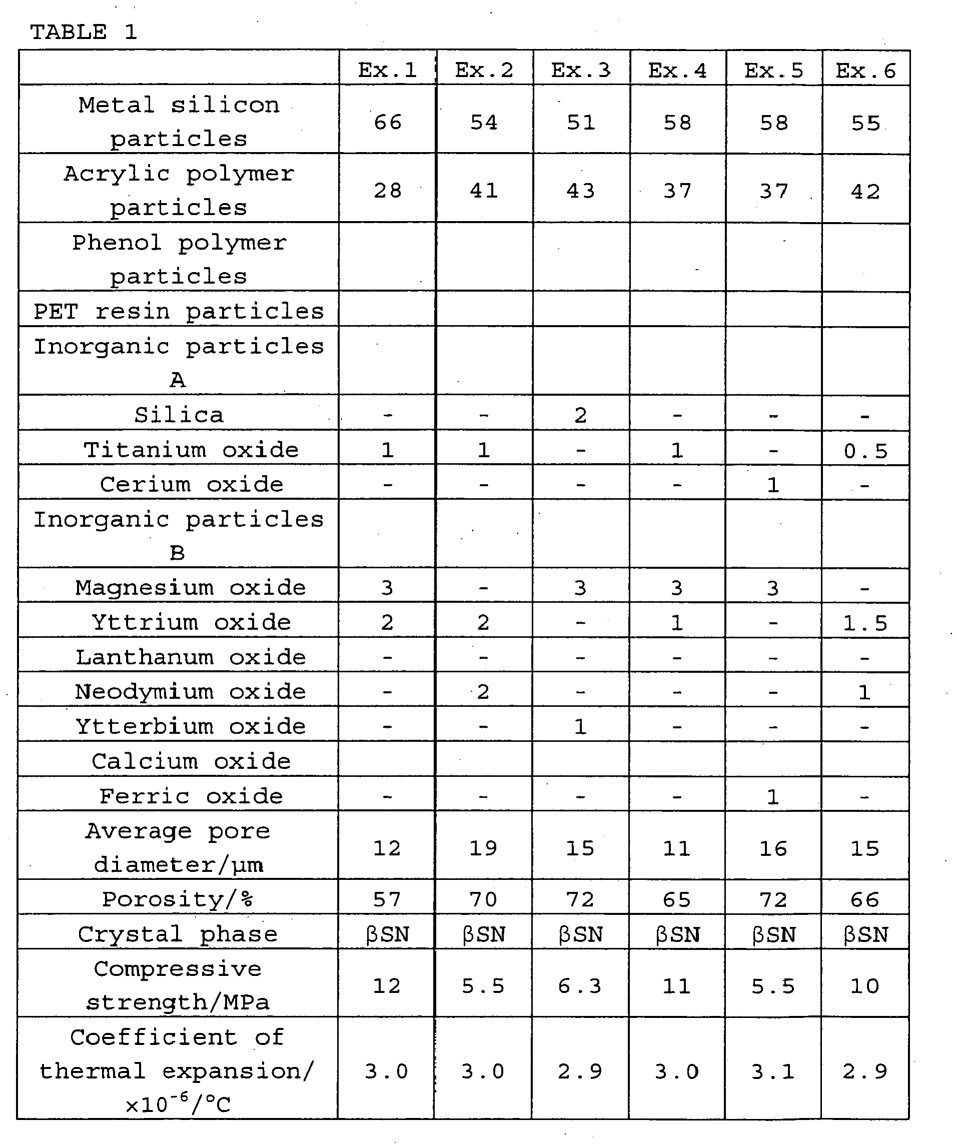

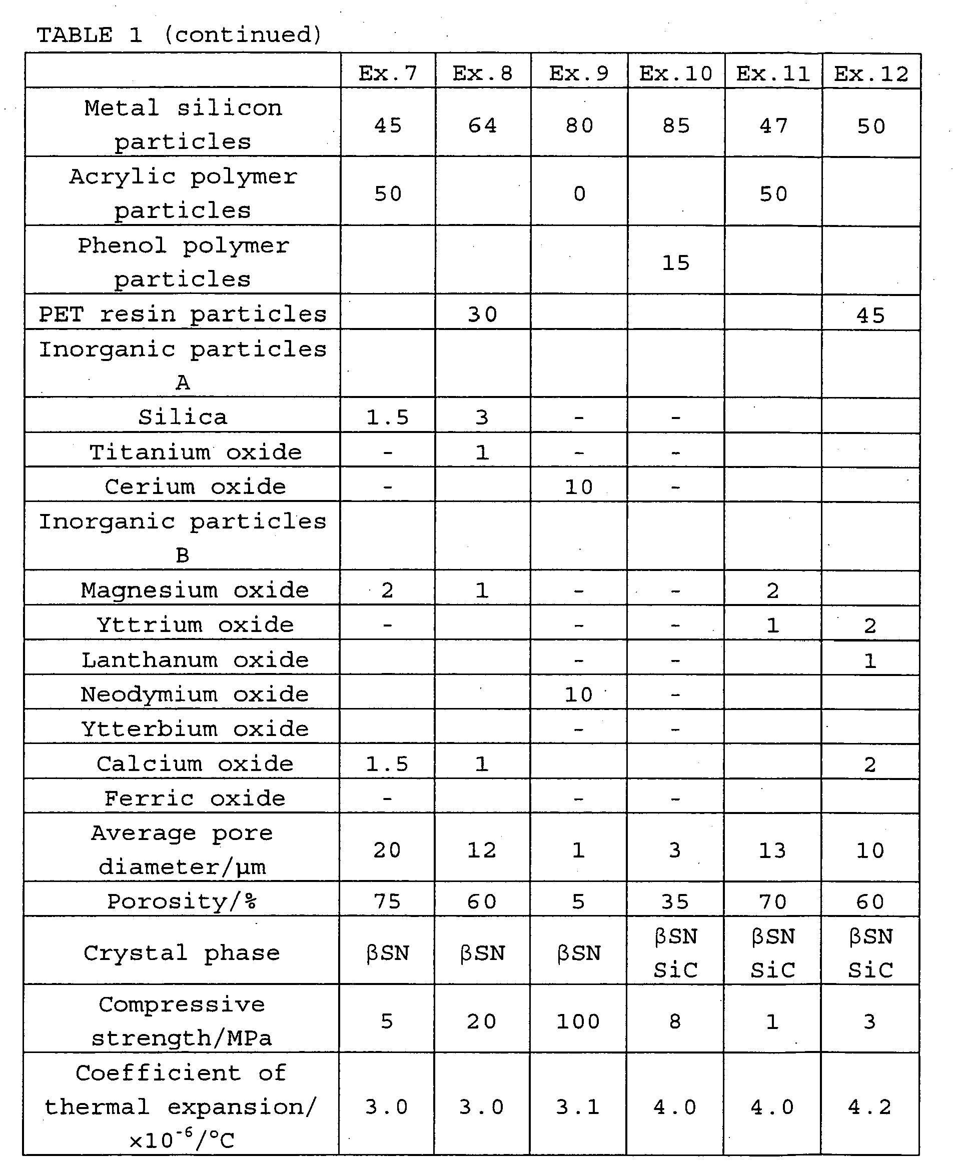

According to the present invention, a silicon nitride filter suitable for collection or removal of dust can be easily produced. A silicon nitride filter to be obtained by the present invention is excellent in geometrical accuracy, has high strength, is suitable for collecting particulates, etc. and makes it possible to reduce the pressure loss.

The entire disclosure of Japanese Patent Application No. 2004-292616 filed on October 5, 2004 including specification, claims, and summary is incorporated herein by reference in its entirety.

## Claims

1. A method for producing a silicon nitride filter, which comprises subjecting a molded product comprising from 35 to 58 mass% of metal silicon particles, from 30 to 62.5 mass% of organic polymer particles, from 0.3 to 10 mass% based on the content of the organic polymer particles of the following inorganic particles A and from 1 to 15 mass% based on the content of the metal silicon particles of the following inorganic particles B, to a heat treatment in nitrogen to substantially convert metal silicon into silicon nitride:
inorganic particles A: inorganic particles of at least one member selected from the group consisting of an oxide, a hydroxide and a salt of an element selected from the group consisting of Si, Ti and Ce;
inorganic particles B: inorganic particles of at least one member selected from the group consisting of an oxide, a hydroxide and a salt of an element selected from the group consisting of Mg, Y, La, Nd, Yb, Ca and Fe.

2. The method for producing a silicon nitride filter according to Claim 1, wherein the molded product contains the inorganic particles A and the inorganic particles B in a total amount of from 0.5 to 12 mass%.

3. The method for producing a silicon nitride filter according to Claim 1 or 2, wherein the salt for the inorganic particles A or B is a nitrate and/or a carbonate.

4. The method for producing a silicon nitride filter according to Claim 1, 2 or 3, wherein the metal silicon particles have an average particle diameter of from 1 to 30 µm, the inorganic particles A have an average particle diameter of from 0.01 to 10 µm, and the inorganic particles B have an average particle diameter of from 0.01 to 10 µm.

5. The method for producing a silicon nitride filter according to any one of Claims 1 to 4, wherein the heat treatment comprises a first stage heat treatment of holding the molded product at a temperature of from 1,000 to 1,400°C in a nitrogen atmosphere for from 4 to 24 hours and a second stage heat treatment of holding the molded product at a temperature of from 1,450 to 1,800°C for from 1 to 12 hours.

6. The method for producing a silicon nitride filter according to any one of Claims 1 to 5, wherein the silicon nitride filter has an average pore diameter of from 10 to 30 µm as measured by mercury porosimetry and a porosity of from 50 to 80%.

7. The method for producing a silicon nitride filter according to any one of Claims 1 to 6, wherein silicon nitride in the silicon nitride filter is substantially β type silicon nitride.
